Europäisches Patentamt

European Patent Office

Office européen des brevets

(11) Numéro de publication : **0 454 532 A1**

# (12) DEMANDE DE BREVET EUROPEEN

(21) Numéro de dépôt : **91400990.7**

(22) Date de dépôt : **15.04.91**

(51) Int. Cl.⁵ : **C04B 35/58,** C04B 35/65, C04B 35/50

(30) Priorité : 25.04.90 FR 9005243

(43) Date de publication de la demande :
30.10.91 Bulletin 91/44

(84) Etats contractants désignés :
AT BE CH DE DK ES FR GB GR IT LI LU NL SE

(71) Demandeur : RHONE-POULENC CHIMIE
25, quai Paul Doumer
F-92408 Courbevoie Cédex (FR)

(72) Inventeur : Iltis, M. Alain
135, rue Danièle Casanova
F-93300 Aubervilliers (FR)

(74) Mandataire : Dubruc, Philippe et al
RHONE-POULENC CHIMIE Service Brevets
Chimie 25, quai Paul-Doumer
F-92408 Courbevoie Cédex (FR)

(54) Procédé de frittage d'un hexaborure de lanthane ou hexaborure isostructural de celui-ci.

(57)    L'invention concerne le frittage de l'hexaborure de lanthane ou d'un hexaborure isostructural de celui-ci.

Le procédé de l'invention est caractérisé en ce qu'on utilise du silicium métal comme additif de frittage.

EP 0 454 532 A1

Jouve, 18, rue Saint-Denis, 75001 PARIS

La présente invention concerne un procédé de frittage d'un hexaborure de lanthane ou d'un hexaborure isostructural de celui-ci.

Les hexaborures de lanthane ou ses composés isostructuraux présentent des propriétés électriques intéressantes puisqu'une de leurs applications est la fabrication de cathodes thermoémissives notamment.

Cependant, le frittage des hexaborures de lanthane ou des hexaborures isostructuraux de celui-ci (appelés par la suite hexaborures), est difficile et nécessite souvent l'utilisation de pressions élevées.

Il existe toutefois d'autres méthodes de frittage moins onéreuses dont le frittage naturel, c'est-à-dire une opération effectuée à pression atmosphérique. Mais de tels procédés présentent encore des inconvénients du fait des conditions imposées comme par exemple la nécessité d'utiliser un produit très fin ou encore la nécessité d'effectuer le frittage à une température élevée d'au moins 2200°C.

On connait enfin le frittage d'hexaborures en présence d'un additif tel que le carbone ou le carbure de bore.

Cependant, l'utilisation de ces composés peut nuire aux propriétés du produit final. En effet, le produit ainsi obtenu présente une mauvaise stabilité dans le temps et des propriétés d'émissions thermoioniques amoindries.

L'objet de la présente invention est donc de proposer un procédé de frittage naturel d'hexaborures utilisant un additif et ne présentant pas les inconvénients précités.

Dans ce but, le procédé selon l'invention concernant le frittage de l'hexaborure est caractérisé en ce que l'on utilise le silicium métal comme additif de frittage.

Ainsi, le procédé selon l'invention permet d'obtenir un composé fritté à au moins 85% de la densité théorique en travaillant à une température de frittage moins élevée et sur une durée moins longue, comparées aux procédés de frittage classiques.

D'autres caractéristiques et avantages apparaîtront plus clairement à la lecture de la description et des exemples concrets mais non limitatifs qui vont suivre.

Le procédé selon l'invention concerne donc le frittage d'un hexaborure de lanthane ou d'un hexaborure isostructural de celui-ci, susceptible de donner une solution solide avec SiB$_6$.

Plus particulièrement, le procédé décrit par la Demanderesse convient au frittage d'hexaborures de terres rares ou d'alcalino-terreux.

Par terres rares, on désigne les éléments de la classe des lanthanides dont le numéro atomique varie de 57 à 71 et comprenant en outre l'yttrium.

Dans le cas des alcalino-terreux, les hexaborures de baryum, de calcium, de strontium peuvent être frittés par le procédé, objet de la présente invention.

L'invention s'applique aussi au cas des hexaborures d'actinides isostructuraux de l'hexaborure de lanthane. Par actinides, on désigne les éléments dont le numéro atomique varie de 89 à 103 et notamment l'hexaborure de thorium.

Toutefois, le procédé selon l'invention, convient parfaitement au frittage des hexaborures de lanthane.

Concernant la préparation des hexaborures, on pourra mettre en oeuvre tout moyen connu dont, par exemple, celui décrit dans la demande de brevet européen n° 318 362.

On notera que contrairement aux procédés de frittage de l'art antérieur, il n'est pas nécessaire de partir de borures finement broyés par exemple de poudres présentant une taille moyenne de particules comprise entre 1 et 5μm. Au contraire, le procédé de l'invention s'applique aussi à des poudres plus grossières c'est-à-dire pouvant présenter une taille moyenne de particules de l'ordre de 20μm ou supérieure. La densité à cru de la pièce compactée avant frittage peut être aussi faible que 50% de la densité théorique. Même dans un tel cas, il est possible d'obtenir des densités d'au moins 85% de la densité théorique par le procédé de l'invention.

Compte tenu de la dureté des hexaborures, il s'agit là d'un avantage intéressant puisqu'on peut se passer d'une étape de broyage ou se contenter d'un broyage grossier.

Bien entendu, on ne sortirait pas du cadre de l'invention en partant de produits broyés finement, auquel cas on obtiendrait des borures de densité encore plus élevée et de microstructure plus fine.

Comme il a été indiqué plus haut, le frittage des hexaborures est effectué en utilisant comme additif de frittage le silicium métal·

Généralement, on utilise le silicium en quantité d'au moins 0,1% en poids. De préférence, on effectue le frittage des hexaborures en présence d'au moins 0,2%, plus particulièrement au moins 0,5% en poids de silicium métal.

Généralement, la quantité de silicium métal ne dépasse pas 10% en poids dans l'hexaborure, de préférence celle-ci est d'au plus 5% en poids.

Préalablement au frittage, on mélange à la poudre d'hexaborure la quantité requise de silicium métal puis on met en forme la poudre ainsi obtenue par pressage unidirectionnel ou isostatique avec addition éventuelle d'un liant. Le mélange peut se faire par mise en barbotine non aqueuse des éléments.

Au titre de liant, on utilise généralement des alcools polyvinyliques.

Le liant peut être ensuite éliminé du produit mis en forme, avant le frittage proprement dit, par traitement thermique de préférence sous atmosphère neutre ou sous vide .

Le frittage est effectué par tous moyens connus de l'Homme du métier. Notamment on peut traiter le produit sous vide primaire ou secondaire, ou bien sous gaz neutre type argon, ou encore sous hydrogène. Le frittage peut se faire à des températures voisines de 2000°C.

Cependant, selon un mode particulier de réalisation de l'invention, le frittage comprend deux parties.

Dans une première étape, on chauffe l'hexaborure sous vide, à une température d'au moins 1400°C, puis dans une seconde étape, en maintient l'hexaborure sous un gaz neutre, à une température au moins égale à la précédente.

Comme il a été indiqué précédemment, on effectue la première étape du procédé sous vide, et plus particulièrement sous vide dynamique.

Généralement, un vide primaire est suffisant, c'est-à-dire une pression comprise entre 1 et 10 mm de mercure. Cependant, on ne sortirait pas du cadre de la présente invention en effectuant la première étape du procédé sous un vide secondaire.

On met en oeuvre la première partie du procédé sous une température d'au moins 1400°C. Toutefois, selon un mode de réalisation particulier de l'invention, l'étape de traitement sous vide est effectuée à une température d'au moins 1500°C et peut être comprise entre cette température et la température de vaporisation de l'hexaborure sous le vide considéré. Généralement, la limite supérieure de température est située aux environs de 2000°C pour la valeur de vide indiquée auparavant.

Il est à noter que d'une manière préférée la montée en température de l'ambiante à au moins 1400°C se fait sous vide, et avec une vitesse relativement élevée par rapport aux procédés classiques, ce qui permet un gain de temps et une économie d'énergie non négligeables. Il n'est alors pas nécessaire de maintenir en palier le produit une fois la température désirée atteinte.

Dans ce cas, le chauffage du produit dans cette première étape, se fait à une vitesse comprise par exemple entre 200°C/h et 1000°C/h.

Si par contre, lors de cette première étape, on se maintient en palier dans le domaine de température précitée, la durée de ce palier est généralement d'au plus 3 heures.

Dans la seconde étape du procédé selon l'invention, on maintient l'hexaborure sous un gaz neutre ou sous hydrogène à une température au moins égale à la température de l'étape précédente.

De préférence, la seconde partie du traitement est effectuée à une température d'au moins 1600°C. Cette température dépend notamment de la granulométrie de la poudre de départ, les poudres plus grossières nécessitant une température plus élevée. D'une manière générale, on travaille à une température d'au moins 1800°C.

Par gaz neutre, on désigne ici et pour toute la description, tous les gaz qui ne sont pas susceptibles de réagir avec l'hexaborure ou le silicium dans les conditions précitées. Ainsi, les gaz rares notamment conviennent parfaitement pour la mise en oeuvre du procédé selon l'invention.

Il est rappelé que les gaz rares sont constitués des éléments hélium, néon, argon, xénon et radon.

Selon un mode particulier de réalisation, on effectue la seconde étape sous argon.

Enfin, cette seconde partie peut être aussi réalisée sous hydrogène.

La pression sous laquelle se déroule cette même étape du traitement est généralement d'au moins 100 mm de mercure et de préférence elle est voisine de la pression atmosphérique.

La durée de cette seconde étape est habituellement inférieure à 3 heures. En effet, le procédé selon l'invention ne nécessite pas obligatoirement un palier sous gaz neutre ou hydrogène, permettant de ce fait un gain en temps et en énergie.

Une fois cette seconde étape terminée, on effectue le refroidissement du produit de préférence encore sous gaz neutre ou sous hydrogène

Des exemples concrets mais non limitatifs vont maintenant être donnés.

Auparavant, il est rappelé que la mesure de la densité hydrostatique dans le pétrole est effectuée selon la procédure suivante (NF T 51-063):

– on pèse l'échantillon à sec : $M_1$

– on immerge l'échantillon dans un bain de pétrole, sous vide et jusqu'à ce qu'il n'y ait plus de bulles dans la solution ou sur l'échantillon, c'est-à-dire pendant une durée d'environ une demi-heure.

– on pèse l'échantillon dans le pétrole : $M_2$

– on pèse l'échantillon imbibé de pétrole, séché sommairement au préalable : $M_3$.

La densité hydrostatique dans le pétrole est donnée par la formule suivante :

$$d = \frac{M_1\, d}{M_3 - M_2}$$

d étant la densité du pétrole.

### EXEMPLE 1

On prend 3 g de $LaB_6$ pur (CERAC 99,5%) dont le diamètre moyen des particules est de 20µm que l'on mélange à 40 mg d'une solution à 15% de liant à base d'alcool polyvinylique et à 0,03 g de silicium métal (soit 1% en poids). On presse une pastille de 25 mm de diamètre sous 5t/cm2.

On effectue le cycle de frittage suivant :

– montée à 200°C/h jusqu'à 1550°C sous un vide inférieur à 10 mb

– montée à 100°C/h sous argon jusqu'à 1900°C (pression atmosphérique)

– palier de 2 heures

– refroidissement naturel sous argon.

La mesure de la densité hydrostatique selon la procédure explicitée auparavant donne un produit fritté de densité 91% de la densité théorique.

EXEMPLE 2

On prend 3 g de LaB$_6$ pur (CERAC 99,5%) dont le diamètre moyen de particules est de 20μm que l'on mélange à 40 mg d'une solution à 15% de liant à base d'alcool polyvinylique et à 0,15 g de silicium métal (soit 5% en poids).

On presse une pastille de 25 mm de diamètre sous 5 t/cm2.

On effectue le cycle de frittage suivant :
– montée à 300°C/h jusqu'à 800°C sous un vide inférieur à 10 mb (élimination du liant)
– montée à 1000°C/h jusqu'à 1600°C sous un vide inférieur à 10 mb
– montée à 100°C/h sous argon jusqu'à 1800°C (pression atmosphérique)
– refroidissement naturel sous argon.

La mesure de la densité hydrostatique indique que la pastille est frittée à 90% de la densité théorique.

**Revendications**

1 - Procédé de frittage d'un hexaborure de lanthane ou d'un hexaborure isostructural de l'hexaborure de lanthane, caractérisé en ce que l'on utilise du silicium métal comme additif de frittage.

2 - Procédé selon la revendication 1, caractérisé en ce que l'on utilise un hexaborure de terre rare ou d'alcalino-terreux.

3 - Procédé selon la revendication 1 ou 2, caractérisé en ce que l'on utilise l'hexaborure de lanthane.

4 - Procédé selon l'une des revendications précédentes, caractérisé en ce que l'on utilise une quantité de silicium métal d'au moins 0,1% en poids.

5 - Procédé selon l'une des revendications précédentes, caractérisé en ce que l'on utilise une quantité de silicium métal d'au moins 0, 2% de préférence d'au moins 0,5% en poids.

6 - Procédé de frittage selon l'une des revendications précédentes, caractérisé en ce que l'on chauffe dans une première étape l'hexaborure sous vide à une température d'au moins 1400°C, puis, dans une seconde étape, on maintient l'hexaborure sous un gaz neutre ou sous hydrogène à une température au moins égale à la température précédente.

7 - Procédé selon la revendication 6, caractérisé en ce que l'on maintient l'hexaborure sous vide à une température d'au moins 1500°C.

8 - Procédé selon l'une des revendications précédentes, caractérisé en ce que l'on maintient l'hexaborure sous un gaz neutre ou sous hydrogène à une température d'au moins 1800°C.

9 - Procédé selon l'une des revendications précédentes, caractérisé en ce que le gaz neutre est choisi parmi les gaz rares.

Office européen
des brevets

## RAPPORT DE RECHERCHE EUROPEENNE

Numero de la demande

EP 91 40 0990

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 331 160 (HITACHI, LTD)<br>* Revendication 14; exemple 9 * | 1-5 | C 04 B 35/58<br>C 04 B 35/65<br>C 04 B 35/50 |
| Y | --- | 6-9 | |
| Y | EP-A-0 116 851 (ELEKTROSCHMELZWERK KEMPTEN GmbH)<br>* Revendication 7; page 9, alinéa 3 * | 6-9 | |
| Y | CHEMICAL ABSTRACTS, vol. 83, no. 12, 22 septembre 1975, abrégé no. 107155y, Columbus, Ohio, US; JP-A-50 030 460 (HITACHI, LTD) 26-03-1975<br>----- | 6-8 | |

|  |  |
|---|---|
|  | **DOMAINES TECHNIQUES RECHERCHES (Int. Cl.5)** |
|  | C 04 B 35/00 |

Le présent rapport a été établi pour toutes les revendications

| Lieu de la recherche | Date d'achèvement de la recherche | Examinateur |
|---|---|---|
| LA HAYE | 15-07-1991 | HAUCK, H.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)